# EUROPEAN PATENT APPLICATION

(11) **EP 1 217 517 A1**
(43) Date of publication of application: **26.06.2002**
(21) Application number: 00128214.4
(22) Date of filing: 22.12.2000
(51) Int. Cl.: G06F 9/46

(54) **Synchronizing calls in a server and client system**

(71) Applicant: SUN MICROSYSTEMS, INC., Palo Alto, California 94303 (US)
(72) Inventor: Driesner, Carsten, 22117 Hamburg (DE); Laux, Thorsten O., 20099 Hamburg (DE)
(74) Representative: HOFFMANN - EITLE

(57) **Abstract**

In a client and server system the execution of calls is synchronized for maintaining a correct execution of a service application. At the server unit calls are executed asynchronously by a plurality of threads, and in case a thread change occurs during the execution of the service calls, a synchronization call is generated, including a server call counter value indicating a number of calls executed at the server. The synchronization call including at least the server call counter value and the service calls are transmitted to the client unit where the correct execution of service calls is replicated using the synchronization calls. Each time a synchronization call is received, it is determined whether the server call counter value included in the synchronization call corresponds to a current client call counter value, counting the execution of service calls corresponding to the server call counter at the server unit. If the counter value are identical, the correct sequence of execution is maintained. If the counter values differ, an overtake condition occurred, indicating that service calls from a first thread were overtaken by service calls from a second thread. In this case the thread and the service calls which have overtaken other service calls will be placed into a wait condition in order to maintain the correct order of execution of service calls. By transmitting synchronization calls only upon a thread change at the server unit, a communication overload for synchronizing service calls at the client unit and the server unit can be minimized.

## Description

### Field of the Invention

The invention relates to synchronizing the execution of calls at a server unit and a client unit in a server and client system.

### Background of the Invention

With the availability of modern communication networks connecting large numbers of data processing devices, an increasing number of applications or services for users is executed involving more than a single data processing device.

A large number of such distributed applications is available today and may be executed on a plurality of data processing devices. Distributed applications may for example include office applications such as managing documents and data files, may include visualizing information, banking services, shopping services and similar.

A distributed application or service may be executed involving a server data processing device and a client data processing device, the client data processing device being operated by a user. A user may for example launch a distributed application by entering a suitable instruction at the client data processing device. The client data processing device will then connect to the server data processing device to execute the application. Some parts of modules of the application may reside on the client data processing device, whereas other parts or modules of the application may reside at the server data processing device. The distributed application requires a potentially complex cooperation between modules executed at the client data processing device and modules of the distributed application executed at the server data processing device.

For example, a distributed application involving visualizing a document at the client data processing device may include (1) application modules executed at the server unit for processing or rendering the document in order to convert the document into a format which may be displayed at a display unit of the client unit and (2) modules executed at the client data processing device for receiving frames for local display and supplying the frames to a display unit. If the user moreover wishes to edit the document, control information and further information to be visualized may be exchanged between the client data processing device and the server data processing device.

The above modules or parts of the distributed application at the client and at the server may run on data processing units starting corresponding processes. Such a process may involve the execution of one or a plurality of different threads, each of the threads generating a plurality of individual service calls, e.g. service calls to be transmitted to the client or server.

In order to achieve acceptable performance, the individual threads of the processes may be executed asynchronously, i.e., calls of different threads are not executed in a predetermined given sequence, as this could lead to delays for example if one thread waits for a return message. Instead, the calls are executed asynchronously, i.e. if a thread for example waits for a return message or similar, other threads may be executed.

An asynchronous execution of an application may be guarded by a MUTEX (Mutually Exclusive), e.g. a programming flag used to grab and release an object or thread when data is acquired that cannot be shared between different threads, or processing is started that cannot be performed simultaneously elsewhere in the system. If exclusive operation of one thread must be shared, the MUTEX locks other attempts to use the respective resources of the system. The MUTEX unlocks the resources when the resources are not needed any longer or a particular thread is finished.

In a scenario where a distributed application is executed at a server data processing device and a client data processing device a MUTEX or scheduler may be used to guard the asynchronous execution of tasks at the server unit.

However, since the scheduler is only available at the server unit, calls from different threads which interact with the client unit, e.g. for exchanging data, sending requests and commands and similar, may overtake one another due to the scheduled execution at the server unit.

Thus, the sequence of calls from different threads at the server unit, due to the fact that the exact sequence of calls of different threads, i.e., the operation of the scheduler, is not known at the client unit, may not be maintained when executing the corresponding calls of corresponding threads at the client unit.

However, if different calls from different threads overtake each other, processing results may be unacceptable. For example in a visualization application, as a practical example, drawn objects on a client display unit may be moved from the foreground to the background, as a drawing sequence of objects may be changed.

### Summary of the Invention

It is therefore desirable to provide a method and system for synchronizing the execution of calls of different threads at a server unit and a client unit with minimal communication overhead.

In an embodiment a method for synchronizing calls at a client unit in a server and client system includes receiving service calls generated by a plurality of threads executed at a server unit; receiving a synchronization call from the server unit, the synchronization call indicating that a thread executed at the server unit has changed and indicating a number of service calls generated by threads at the server unit prior to the thread change; and placing at least one service call associated with the synchronization call into a wait position, if the number indicated in the synchronization call and a number of service calls executed at the client unit prior to receiving the synchronization call differ.

According to the above described operations a synchronization call may be generated at the server unit each time a thread ID placing a call changes. The synchronization call is transmitted to the client unit to allow the client unit to synchronize the execution of the service calls received from the server unit. As calls from different threads can generally only overtake each other upon a thread change at the server unit, the synchronization calls suffice for establishing the correct order of execution of calls from different threads at the client unit. Thus a synchronization can be maintained with minimized communication load between the server unit and the client unit.

Advantageously, the method for synchronizing calls at a client unit may include receiving a first call sequence of a plurality call sequences from the server unit, the first call sequence including a first synchronization call and at least one service call from a first thread, the first synchronization call including a first server call counter value indicating the number of service calls executed at the server unit prior to the first synchronization call; comparing the first server call counter value and a client call counter value, the client call counter value indicating the number of service calls executed at the client unit prior to receiving the first synchronization call; executing the service calls of the first call sequence and counting the executed service calls using the client call counter value, if the client call counter value and the first server call counter value coincide; and placing the first call sequence into a wait position, if the client call counter value and the first server current call counter value differ.

Further, the method for synchronizing calls at a client unit may include determining whether a second call sequence in a wait position is available, the second call sequence including service calls from a second thread executed at the server unit and a second synchronization call including a second server call counter value indicating a number of service calls executed at the server unit prior to the second synchronization call, the second server call counter value coinciding with the client call counter value; and executing the service calls of the second call sequence and incrementing the client counter value for each executed service call, if the second call sequence is available.

Thus, threads with call sequences placed in a wait position may advantageously be started upon reaching the correct client call counter value, i.e., the counter value indicated in the synchronization call.

The client unit may wait for a third call sequence to be received from the server unit, the third call sequence including a third synchronization call including a third server call counter value coinciding with the client call counter value.

Thus, if the counter value of a synchronization call of a current call sequence does not match the current client call counter value and a call sequence with a correct counter value is not available, the client unit may be placed in a wait position, until a call sequence with a correct counter value arrives.

The call sequences may be received from the server unit as packets upon one of the group consisting of:
- a timer signal at the server unit;
- a synchronous call at the server unit; and
- a synchronization call at the server unit.

This provides flexibility in transmitting service calls to the client unit, in order to further increase the performance of the synchronization.

A synchronization call may include a thread ID of the thread which generated the service calls of the call sequence; the service calls may include the thread ID of the thread generating the service call; and wherein the synchronization calls and the service calls are received in an arbitrary order.

Providing thread IDs may facilitate grouping service calls to call sequences at the client unit.

The service calls at the client unit and server unit may be executed asynchronously; and the service calls from a plurality of different threads at the server unit may be executed in corresponding threads at the client unit.

The server call counter value may indicate a total number of service calls at the server unit executed prior to the current service call and requiring communication with the client unit; and the client call counter value may correspondingly indicate a total number of service calls executed at the client unit involving communication with the server unit.

A service call from server unit to the client unit may indicate at least one of:
- drawing instructions to display information on a display of the client unit;
- rendering instructions;
- storing instructions to store information at the client unit; and
- information on processing results from the server unit.

According to another embodiment a method for synchronizing calls at a server unit in a server and client system includes transmitting service calls generated by a plurality of threads at the server unit to a client unit; generating a synchronization call when a thread executed at the server unit changes, the synchronization call indicating a number of service calls generated by threads at the server unit prior to the thread change; and transmitting the synchronization call to the client unit for allowing the client unit to synchronize a service call execution. E.g., for enabling the client unit to place at least one service call associated with the synchronization call into a wait position, if the number indicated in the synchronization call and a number of service calls executed at the client unit prior to receiving the synchronization call differ.

Advantageously, the method for synchronizing calls at a server unit in a server and client system may include generating a current service call by a first thread executed at the server unit; determining a first thread ID of the first thread and comparing the first thread ID with a second thread ID of a second thread which issued a service call preceding the current service call; in case the first thread ID and the second thread ID differ, generating a first synchronization call including a server call counter value indicating the number of service calls executed at the server unit prior to the current service call and transmitting the first synchronization call to the client unit, for enabling the client unit to synchronize the execution of a plurality of calls from at least the first and second thread; counting the current service call using the server call counter value; and transmitting the current service call to the client unit.

A plurality of service calls from the first thread and the synchronization call may constitute a call sequence; and the call sequence may be transmitted to the client unit as a packet unit upon one of the group consisting of:
- a timer signal; and
- a synchronization call;
- a synchronous call.

The server call counter value may indicate a total number of service calls requiring communication with the client unit executed at the server unit prior to the current service call.

A program may be provided having instructions adapted to carry out the above outlined operations. A computer readable medium may have the program recorded thereon and a computer program product may comprise the computer readable medium.

A synchronization call may further be generated upon the occurrence one of the group consisting of:
- a timer signal;
- of a predetermined number of service calls; and
- a synchronous call.

According to another embodiment a client unit in a server and client system for synchronizing calls may include a client communication unit to receive service calls generated by a plurality of threads executed at a server unit and to receive a synchronization call from the server unit, the synchronization call indicating that a thread executed at the server unit has changed and indicating a number of service calls generated by threads at the server unit prior to the thread change; and a call handler to place at least one service call associated with the synchronization call into a wait position, if the number indicated in the synchronization call and a number of service calls executed at the client unit prior to receiving the synchronization call differ.

Advantageously, the client communication unit may be adapted to receive a first call sequence of a plurality call sequences from a server unit, the first call sequence including a first synchronization call and at least one service call from a first thread executed at the server unit, the first synchronization call including a first server call counter value indicating the number of service calls executed at the server unit prior to the first synchronization call; a client data processing unit may be provided, adapted to compare the first server call counter value and a client call counter value, the client call counter value indicating the number of service calls executed at the client unit prior to receiving the first synchronization call, and to execute the service calls of the first call sequence; a client call counter may be provided, adapted to count the executed service calls using the client call counter value, if the client call counter value and the first server call counter value coincide; and the call handler may be adapted to place the first call sequence into the wait position, if the client call counter value and the first server call counter value differ.

Further, the client data processing unit may be adapted to determine whether a second call sequence in a wait position is available, the second call sequence including service calls from a second thread executed at the server unit and a second synchronization call including a second server call counter value indicating a number of service calls executed at the server unit prior to the second synchronization call, the second server call counter value coinciding with the client call counter value; and to execute the service calls of the second call sequence and to increment the client counter value for each executed service call, if the second call sequence is available.

According to another embodiment a server unit in a server and client system may include a server communication unit adapted to transmit service calls generated by a plurality of threads at the server unit to a client unit ; a server data processing unit adapted to generate a synchronization call, when a thread executed at the server unit changes, indicating a number of service calls generated by threads at the server unit prior to the thread change; and wherein the server communication unit is adapted to transmit the synchronization call to the client unit for allowing the client unit to synchronize a service call execution. E.g., for enabling the client unit to place at least one service call associated with the synchronization call into a wait position, if the number indicated in the synchronization call and a number of service calls executed at the client unit prior to receiving the synchronization call differ.

Advantageously, the client data processing unit may be adapted to receive a current service call from a first thread executed at the server unit; to determine a first thread ID of the first thread and to compare the first thread ID with a second thread ID of a second thread which issued a service call preceding the current service call; in case the first thread ID and the second thread ID differ, to generate a first synchronization call including a server call counter value indicating a number of service calls executed at the server unit prior to the current service call; to count the current service call using the server call counter value; and the server communication unit may be adapted to transmit the current service call and the first synchronization call to the client unit, for enabling the client unit to synchronize the execution of a plurality of calls from at least the first and second thread.

Further advantageous embodiments of the invention are disclosed in further dependent claims.

### Brief Description of the Drawings

- Fig. 1: illustrates a system for synchronizing calls at a client unit and a server unit according to an embodiment of the invention;
- Fig. 2a: illustrates operations of a method for synchronizing calls at a client unit and at a server unit according to another embodiment of the invention;
- Fig. 2b: illustrates operations of a method for synchronizing calls at a client unit and at a server unit according to another embodiment of the invention;
- Fig. 3: illustrates operations of a method for synchronizing calls at a client unit and a server unit according to another embodiment of the invention, particularly outlining a transmission of calls and a handling of call sequences at the client unit in a wait position;
- Fig. 4: illustrates operations of a method for synchronizing calls according to an embodiment of the invention, particularly outlining operations for transferring calls from the server unit to the client unit;
- Fig. 5: illustrates operations of a method for synchronizing calls according to an embodiment of the invention, particularly outlining operations for transferring calls from the server unit to the client unit;
- Fig. 6: illustrates operations of a method for synchronizing calls according to an embodiment of the invention, particularly outlining operations carried out at the client unit;
- Fig.7: illustrates the execution of service call sequences of different threads at the server unit and the client unit according to another embodiment of the invention; and
- Fig. 8: illustrates operations of a method for synchronizing calls according to an embodiment of the invention, particularly outlining operations carried out at the client unit.

### Description of the Preferred Embodiments

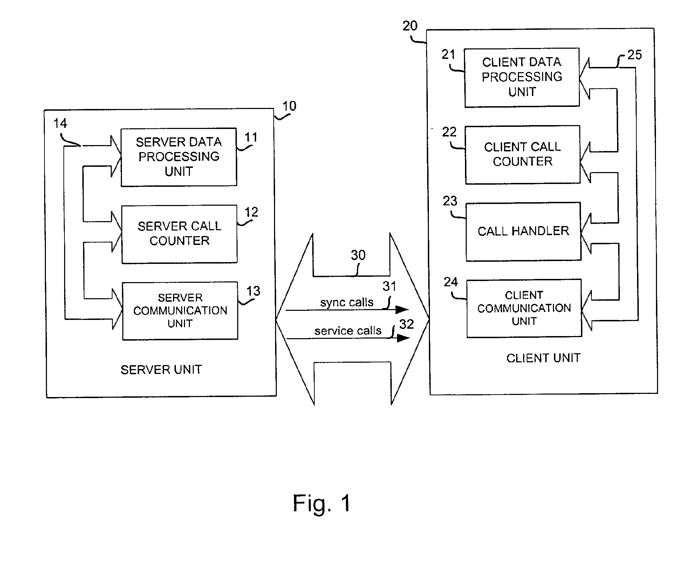

In the following a first embodiment of the invention will be described with respect to Fig. 1. Fig. 1 shows a system for synchronizing calls at a client unit and a server unit according to an embodiment of the invention.

Fig. 1 illustrates a server unit 10 including a server data processing unit 11, a server call counter 12 and a server communication unit 13. Communications between the server data processing unit 11, the server call counter 12 and the server communication unit 13 of the server unit 10 may be carried out through a communication link 14, for example a system bus or an external connection.

Further, Fig. 1 shows a client unit 20 including a client data processing unit 21, a client call counter 22, a call handler 23 and a client communication unit 24. The client data processing unit 21, the client call counter 22, the call handler 23, the client communication unit 24 of the client unit 20 are shown connected by a communication link 25, which may also be a system bus or an external connection or similar.

Communications between the server unit 10 and the client unit 20 may be carried out through a communication link 30, such as a dedicated communication link, a wireless communication link, including network connections.

The system shown in Fig. 1 allows to synchronize the execution of service calls from different threads at the server unit and the client unit.

One approach to synchronize the execution of calls of different threads at the server unit and the client unit could be to provide each call to be transmitted from the server unit to the client unit with a unique identifier specifying a sequence number of execution of the respective call at the server data processing device. However, this approach leads to a large communication overhead, since each call is transmitted in association with the unique identifier.

Therefore, according to the present embodiment, each time a thread change takes place at the server unit, a synchronization message is generated which is transmitted to the client unit. Using the synchronization calls the client unit 20 may replicate the sequence of execution of the service calls from different threads at the server unit, in order to correctly carry out a service application.

In the following a first example of a server and client system for synchronizing calls will be described.

According to the first example, at the server unit the server communication unit transmits service calls generated by a plurality of threads at the server unit to the client unit.

The server data processing unit generates a synchronization call, when a thread executed at the server unit changes, indicating a number of service calls generated by threads at the server unit prior to the thread change, and the server communication unit transmits the synchronization call to the client unit.

At the client unit the client communication unit receives the service calls generated by the plurality of threads executed at the server unit and receives the synchronization call from the server unit.

The call handler then places at least one service call associated with the synchronization call into a wait position, if the number indicated in the synchronization call and a number of service calls executed at the client unit prior to receiving the synchronization call differ.

Thus, each time a thread change takes place at the server unit, a synchronization call is transmitted to the client unit. Using the synchronization call indicating that a thread executed at the server unit has changed the client unit suitably places corresponding service calls into a wait position, to maintain a correct sequence of execution of the service calls from different threads at the client unit, in correspondence to the execution at the server unit, in order to correctly carry out a service application.

In this first example, the client unit does not necessarily include a client call counter and the client data processing unit, and the server unit does not necessarily include the server call counter.

In the following a second example of a server and client system for synchronizing calls will be described.

In this example, the server data processing unit 11 of the server unit 10 is adapted to receive a current service call from a first thread executed at the server unit. Then the server unit determines a first thread ID (identifier) of the first thread and compares the first thread ID with a second thread ID of a second thread executed at the server unit 10, which issued a service call preceding the current service call. In case the first thread ID and the second thread ID differ, the server data processing unit 11 may generate a first synchronization call including a server call counter value indicating a number of service calls executed at the server unit prior to the current service call. A server call counter value stored in the server call counter 12 is incremented to count the current service call. By repeating the above described operation for service calls executed at the server unit, each time a thread changes a synchronization call is issued containing a number of service calls already executed at the server unit 10.

The server communication unit 13 then transmits the executed service calls and the synchronization calls to the client unit 20, for enabling the client unit to synchronize the execution of the service calls from the plurality of threads at the server unit 10.

At the client unit 20 the client communication unit 24 receives a call sequence of a plurality of call sequences from the server unit 10. The call sequence may be a packet of at least one service call and at least one synchronization call transmitted from the server unit 10, however, service calls and synchronization calls may also be received at the client unit 20 in an arbitrary order and the client communication unit 24 may arrange the received service calls and synchronization calls into call sequences.

A call sequence includes a first synchronization call and at least one service call from a first thread executed at the server unit 10, the first synchronization call including a first server call counter value indicating the number of service calls executed at the server unit 10 prior to the first synchronization call and the service calls of the first thread.

The client data processing unit 21 compares the first server call counter value and a client call counter value. The client call counter value indicates a number of service calls executed at the client unit prior to receiving the first synchronization call. The client call counter value of the client call counter is incremented to count executed service calls.

Since the client call counter and the- server call counter count the execution of service calls at the client unit and server unit, respectively, the service calls from different threads at the client unit and at the server unit are known to be in the same and correct sequence, if the server call counter value and the client call counter value coincide.

The server call counter 12 and the client call counter 22 may be arranged to count a total number of calls at the client unit and the server unit, or a total number of calls requiring communication between the server unit and the client unit or similar. The length of the server call counter and the client call counter may preferably be adapted such that an unambiguous replication of the sequence of service calls at the client unit is possible.

If it is determined that the client call counter value and the first server call counter value differ, the call handler 23 of the client unit 20 places the first call sequence into a wait position.

Placing the call sequence associated with a synchronization call having a counter value not corresponding to the client call counter value into a wait position, allows to avoid that a call sequence, having overtaken another call sequence from a different thread at the server unit, is executed at the client unit prior to the call sequence from the server unit which was overtaken. In other words, the client unit may postpone the execution of a call sequence until the correct client call counter value, i.e., the client call counter value corresponding to the server call counter value of the corresponding synchronization call, is reached at the client unit.

Even though for a synchronization of the execution of service calls at the client unit to the execution of service calls at the server unit mainly requires a transmission of data from the server unit to the client unit, i.e. the synchronization calls, as indicated by an arrow 31, and service calls as indicated by an arrow 32 in Fig. 1, the client unit and the server unit may be involved in a bidirectional communication, e.g. for controlling the execution of a distributed application such as visualization of documents, editing, printing, storing and similar.

In the following the elements of the system shown in Fig. 1 will be outlined in further detail.

First, the elements of the client unit 10 will be outlined in further detail. It is noted that this example serves illustration purposes only and does not limit the invention. Further examples of the client unit are possible.

The client unit 20 shown in Fig. 1 may be a general purpose data processing device, such as a personal computer, a mobile terminal such as a mobile computing device, a mobile phone or a mobile data organizer operated by a user wishing to access a service remote from the client unit 20, e.g. at the server unit 10. Even though only a single client unit 20 is illustrated in Fig. 1, other embodiments may include a plurality of similar client units connected to the server unit 10.

The client data processing means 21 may be a central data processing unit of the client unit 20 or may be a data processing unit external to the client unit 20.

The client data processing unit 21 may have access to program storage means (not shown) for storing program elements of a distributed application to be executed on the server unit and the client unit. The program storage means may be located within the client unit 20 or external thereto. The client data processing unit 21 preferably is adapted to execute a plurality of service calls of different threads asynchronously, and, using the synchronization calls, to replicate a sequence of execution of service calls from different threads at the server unit 10.

The service calls to be executed at the client data processing unit 21 may originate from a plurality of threads which are started by processes, the processes being executed in order to run a distributed application in order to provide a service to a user.

A distributed operation or service may for example be an editing of data files, rendering of data such as web pages, may correspond to mathematical or logical operations on contents of a data file, may relate to home banking applications, spread sheet applications, drawing applications, e-mail applications and similar. The distributed operation may also relate to visualizing a data file, such as a text document, an image file, video data or may relate to playing back audio or audio visual information.

Each of the above described applications may include modules or sub-modules executed at the client unit and modules or sub-modules executed at the server unit.

The client communication unit 24 may communicate over a communication link using a communication end point specified by an address and a port number. The communication link may be a dedicated communication link such as a mobile communication link or a switched circuit communication link. Further, the communication link may involve a network of data processing devices such as a local area network or a wide area network or combinations thereof. The client communication unit 24 may be adapted to execute various communication protocols, e.g. communication protocols for remote operations in applications as outlined above. Communications protocols may for example be TCP/IP or any other point to point connection.

The client call counter 22 may be a commercially available counter for counting events. However, it is also possible that the functions of the client call counter 22 are executed by a data processing unit such as the client data processing unit 21. The client call counter is arranged to count the execution of service calls at the client unit 20. In order to be able to maintain a synchronization of service call execution at the server unit 10 and the client unit 20 an agreement has to be reached at the server side and the client side which type of service calls are counted.

For example, all service calls requiring a communication between the server unit and the client unit could be counted, i.e. all service calls which are received from the server unit 10 at the client unit 20. However, it is also possible that only a well defined subset of service calls is counted at the client unit, and, correspondingly at the server unit, in order to reduce the computational requirements to count service calls.

Further, the client call counter may have a defined length, which is selected such that an overtaking of service calls from different threads can securely be detected, i.e., the client call counter may be designed to have a range which is sufficient to count service calls during all possible scenarios where service calls from different threads at the server unit overtake each other. This may be a maximum count difference between an overtaking call sequence and a regularly executed call sequence.

Maintaining a reduced size of the client call counter and correspondingly the server call counter reduces the size of a count value and thus reduces the transmission overhead for synchronizing the execution of service calls at the server unit and the client unit.

The call handler 23 may be a unit for handling the execution of service calls at the client unit. The call handler may be a data processing unit internal or external to the client unit 20, however, it is also possible that the functionality of the call handler is realized by the client data processing unit 21. The call handler manages the execution of service calls of different threads at the client unit such that a synchronization to the corresponding execution of service calls at the server unit can be maintained. The call handler may place threads of processes started during the execution of the distributed application into a wait position, e.g., if the server call counter value and the client call counter value of a synchronization call of a call sequence corresponding to the thread do not match, as in this case an overtake condition is detected.

Further, the call handler 23 may be arranged to resume execution of a particular thread of a process if the thread was placed in a wait position upon a counter value mismatched. The call handler may preferably initiate resuming a thread if the client call counter value matches the server call counter value included in a synchronization call of a call sequence of the respective thread.

The communication link 25 connecting the data processing unit 21, the client call counter 22, the call handler 23 and the client communication unit 24 may be a system bus for exchanging data between these elements, however, may also include external connections, e.g. connections to a keyboard, to other data processing devices and similar.

In the following, the elements of the server unit 10 will be outlined in further detail. It is noted that this example serves illustration purposes only and does not limit the invention. Further examples of the server unit are possible.

The server unit 10 may be a general purpose data processing unit, preferably a data processing unit with large resources, e.g. high processing capabilities and large memories for storing large amounts of data. The server unit 10 may be a single unit or may be a distributed system of a plurality of servers or data processing units and may be shared by multiple users.

The server data processing unit 11 as the client data processing unit, the server data processing unit 11 may be constituted by a central processing unit of the server unit 10, but may also be constituted by a distributed central processing unit including a plurality of individual processors on one or a plurality of machines. The server data processing unit 11 may have access to storage means (not shown) for storing preferably a large number of application programs for providing various services to users, i.e., for performing various operations on data files as desired by users operating client units such as the client unit 20.

As before described with respect to the client unit 20, the server data processing unit 11 may execute partitions of distributed applications, the execution of which needed to be synchronized between the server unit and the client unit.

The server data processing unit may be arranged to execute tasks of an distributed application asynchronously, i.e., processes started by the respective parts of the distributed application may execute calls of different threads asynchronously, i.e. a call scheduler may be arranged to schedule the execution of service calls at the server unit 10 as required for providing high performance.

A MUTEX (Mutually Exclusive) may be provided for supervising the execution of different threads of the processes in order to avoid that data that cannot be shared is accessed by different threads simultaneously. As outlined before, the MUTEX may maintain a proper sequence of service call execution at the server unit, however, the MUTEX is not available at the client unit, i.e. the client unit has its own scheduler for scheduling the execution of service calls of different threads.

The server call counter 12 may be a counter similar to the one described with respect to the client unit 20, for counting the execution of service calls at the server unit 10. As outlined before, in order to allow a synchronization using the server call counter value and the client call counter value, the server call counter and the client call counter should be designed to meet the same requirements, i.e., to count the same type of service call, to have a corresponding length and similar.

The server communication unit 13 may correspond to the client communication unit 24. However, the server communication unit may be adapted to communicate with a plurality of client units such as the client unit 20, i.e., to maintain communication links to a plurality of client units.

The server data processing unit 11, the server call counter 12 and the server communication unit 13 are shown connected by an arrow 14, which may be constituted by a system bus or similar, or by external connections, particularly in case the server unit 10 is constituted by a distributed system included distributed server data processing units and/or distributed server communication units.

The communication link 30 connecting the server unit 10 and the client unit 20 may be constituted by a dedicated communication line, wireless communications, or may be established through a communication network such as a local area, company-wide intranet or a wide area network as the Internet. It is also possible that the communication link includes combinations of the above examples.

The client communication unit and the server communication unit may communicate over the communication link 30 in order to transfer synchronization calls, as indicated by arrow 31 and in order to transmit service calls as indicated by the arrow 32.

However, the communication link may also be used for further communications, including bidirectional communications, particularly if the execution of the distributed application, i.e. the application to be synchronized, requires the transmission of information from the client unit to the server unit, e.g. in controlling the server unit during executing the distributed application. For example, a bidirectional transmission of data may be required if a document is rendered at the server unit in preparation of displaying the document at the client unit for editing. In this case commands during editing or preferences such as frame sizes of a display unit need to be transmitted from the client unit to the server unit, wherein in turn the server unit adjusts the parameters for display or correspondingly edits the document.

Even though in the above described scenario the execution of a sequence of service calls issued by different threads at the server unit is served in synchronization thereto by corresponding threads at the client unit, in another embodiment the execution of a sequence of service calls issued by different threads at the client unit could be served in synchronization thereto by corresponding threads at the server unit. Further, embodiments are possible wherein a sequence of service calls at the server unit is synchronized at the client unit and vice versa, concurrently a sequence of service calls issued at the client unit is synchronized at the server unit.

A distributed application as outlined above, may be a visualization application for visualizing information locally at the client unit. In this case the server unit may be arranged to retrieve the desired document and to render the document in order to prepare frames which can be displayed at the client unit. The rendering may include to adapt a display frame to characteristics of a display unit connected to the client unit, including frame size, color, gray scale and similar. At the client unit the visualization application may include receiving frames for display, may include further processing of the frames for display and may include displaying the frames on the local display connected to the client unit.

Further, a service application may include editing a document at the client unit, wherein the server unit may retrieve the document and prepare the document for editing and wherein at the client unit commands for editing the document are input in order to control the editing process at the server unit. An application may include rendering instructions, for example in converting documents between different formats, an application may relate to storing information either locally at the client unit or at the server unit, or an application may include mathematical or logical operations executed at the server unit and the client unit.

During executing the application at the client unit and the server unit corresponding processes to realize the functionality of the application may be launched at the client unit and at the server unit.

In order to achieve high performance, in the client unit and the server unit preferably are multitasking systems or systems for parallel processing.

Each process generates at least one thread during execution and, the threads of a process may be executed asynchronously, also in order to achieve improved performance.

Each thread of a process involves the execution of a plurality of service calls, wherein a service call may include at least one of:
- drawing instructions to display information on a display, e.g. a display at the client unit;
- rendering instructions;
- storing instructions to store information, e.g. at the client unit; and
- information on processing results, e.g. processing results from the server unit.

The above described system for synchronizing calls in a client unit and server unit a synchronization of service call execution of a plurality of service calls originating from a plurality of threads at the client unit may be replicated at the client unit using the synchronization calls including server call counter values. As an overtake condition of service calls of different threads at the server unit may occur only in cases where a thread change takes place, i.e. in case the thread placing a service call changes, only the synchronization calls upon thread change including the server call counter value recorded at the thread change need to be transmitted for maintaining synchronization. At the client unit, since the execution of service calls is counted as before at the server unit, a service call counter value included in a synchronization call may be used to determine whether an overtake condition occurred.

In particular, if the server call counter value of a synchronization call is higher than a current client service call counter, it is indicated that a call sequence associated with the synchronization call overtook a call sequence of another thread. Thus, this call sequence is placed into a wait position. Then it may be determined whether another call sequence with a correct server call counter value of the corresponding synchronization call exists, and if yes, this call sequence may be executed. If the service call counter value included in a synchronization call matches the current client call counter value, no overtake condition occurred and the corresponding call sequence may be executed directly.

As only synchronization calls need to be transmitted for synchronization, a transmission overhead for synchronization may be considerably reduced, thus increasing a performance of the system, particularly if the communication link 30 between the client unit and the server unit has a low bandwidth, for example in case of a POTS connection.

It is noted that the above described features and processing operations may be realized by dedicated hardware or may be realized as programs including code instructions executed on data processing units, e.g. the server unit 10 and the client unit 20. It is further possible that parts of the above sequences of operations are carried out in hardware, whereas others of the above processing operations are carried out using software.

It is further noted that a computer readable medium may be provided, having a program recorded thereon, where the program is to make a computer or system of data processing devices execute functions of the above described operations, particularly of the client unit and/or the server unit. A computer readable medium can be a magnetic or optical or other tangible medium on which a program is recorded, but can also be a signal, e.g., analog or digital, electromagnetic or optical, in which the program is embodied for transmission.

Further, a computer program product may be provided comprising the computer readable medium.

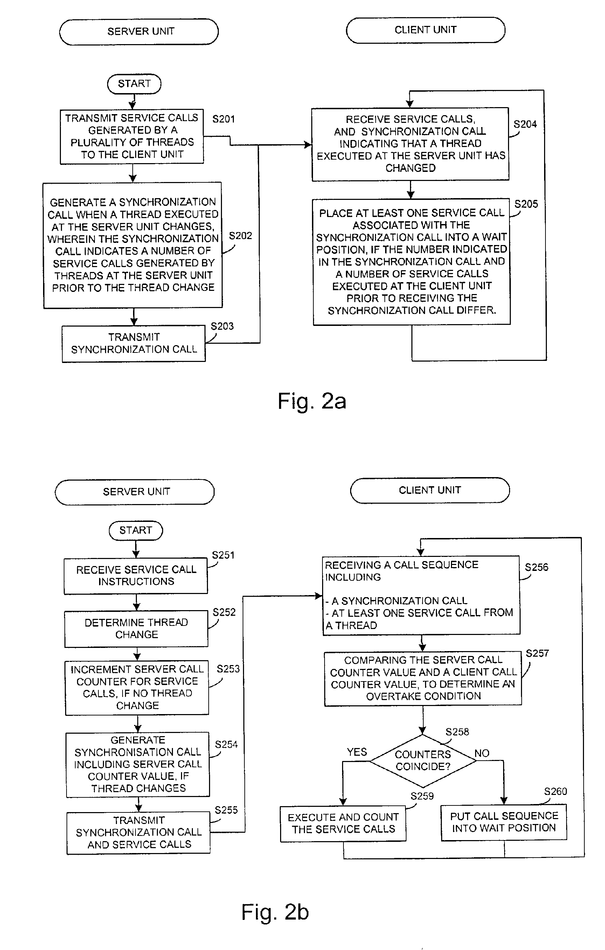

In the following a further embodiment of the invention will be described with respect to Fig. 2a.

Fig. 2a illustrates operations of a method for synchronizing service calls at a client unit and a server unit according to another embodiment of the invention. On the left side of Fig. 2a operations executed at the server unit are illustrated, on the right side operations at the client unit are shown. The operations of Fig. 2a may be carried out using the system of Fig. 1, however, Fig. 2a is not limited thereto.

First, operations at the server unit will be outlined.

In an operation S201 service calls generated by a plurality of threads at the server unit, such as server unit 10 of Fig. 1, are transmitted to the client unit. The service calls may be generated by the threads as outlined with respect to Fig. 1, e.g. under control of a scheduler, scheduling the execution of threads at the server unit.

In an operation S202 a synchronization call is generated when a thread executed at the server unit changes, i.e., when a thread currently placing a call is not any longer placing calls, but another thread starts placing calls at the server unit. The synchronization call indicates a number of service calls generated by threads at the server unit prior to the thread change. Thus, the synchronization call includes information on the service call execution at the server unit.

In an operation S203 the synchronization call is transmitted to the client unit, e.g. as outlined before.

Accordingly, the server unit generates synchronization calls each time a thread change occurs at the server unit and transmits the synchronization call to the client unit, in order to allow the client unit to synchronize a service call execution.

Now the operations at the client unit will be outlined.

In an operation S204 the client unit, such as client unit 20 of Fig. 1, receives the service calls and the synchronization call, indicating that a thread executed at the server unit has changed, from the server unit, for example as outlined with respect to Fig. 1.

Then, in an operation S205 the client unit places at least one service call associated with the synchronization call into a wait position, if the number indicated in the synchronization call and a number of service calls executed at the client unit prior to receiving the synchronization call differ.

Thus, the client unit places service calls associated with a synchronization call into a wait position, if a number of service calls executed at the server unit and a number of service calls executed at the client unit differ from each other, as in this case it is indicated that the service calls associated with the synchronization call overtook other service calls executed at the server unit.

A service call may be associated with a synchronization call for example by including respective identifiers into the synchronization call and/or service calls, or by a specific reception sequence of service calls and synchronization calls at the client unit or by similar means.

The above outlined operations advantageously allow to place service calls associated with a synchronization call into a wait position, e.g. by placing a corresponding thread at the client unit into a halt condition, in order to avoid that a service call execution at the client unit is not synchronized with a service call execution at the server unit.

Since only upon an occurrence of a thread change a synchronization call is generated and transmitted to the client unit, a reduced communication overhead may be achieved.

In the following a further embodiment of the invention will be described with respect to Fig. 2b.

Fig. 2b illustrates operations of a method for synchronizing service calls at a client unit and a server unit according to another embodiment of the invention. On the left side of Fig. 2b operations executed at the server unit are illustrated and on the right side operations executed at the client unit are illustrated. The operations of Fig. 2b may be carried out by the system shown in Fig. 1, however, Fig. 2b is not limited thereto.

In the following the operations at the server unit will be outlined in detail.

In a first operation S251 at the server unit service call instructions are received. The service call instructions may be generated by different threads of, e.g., a process executed at a server data processing unit, and may instruct the server unit to transmit data, requests, instructions or similar to the client unit.

The service calls may be generated asynchronously, i.e. multithreading or parallel processing may be available.

Usually, a thread will generate a certain sequence of service calls and then, for example controlled by a call scheduler, another thread will generate a sequence of service calls. Since the order of execution of the call sequences from different threads is not a fixed one, call sequences from different threads may overtake each other during execution at the server unit.

However, it is also possible that service calls or call sequences overtake each other during transmission to the client unit.

In an operation S252 it is determined whether a thread change occurred, i.e., whether after issuing at least one service call from a first thread a second thread issues at least one service call. A thread change may be detected by obtaining the thread Ids (identifiers) of threads issuing respective service calls, and in case the thread ID changed, a thread change is indicated.

In an operation S253, if a thread change did not occur, a server call counter, such as server call counter 12 of Fig. 1, is incremented to count the service calls at the server unit. For example, the server call counter can be incremented for each server call, for each server call requiring communication with the client unit, or for other defined call types.

In an operation S254, if a thread change was determined in operation S253, a synchronization call is generated, at least including the server call counter value. Since the server call counter value is only incremented as long as the thread change did not occur, the server call counter value will indicate the number of service calls before the occurrence of a synchronization call, i.e. a thread change. The synchronization call may include further information, such as an identifier of the new thread, i.e. the thread starting to operate.

In an operation S255 the synchronization call and the service calls are transmitted to the client unit. Preferably, a synchronization call will be associated with service calls occurring at the server unit after the synchronization call until the next thread change occurs. Thus, the synchronization call containing the server call counter value may be associated with calls which are to be executed at the client unit after a corresponding client call counter value was reached.

In the following the operations at the client unit will be outlined in detail.

In an operation S256 the synchronization call and the service calls are received at the client unit. The synchronization call and the service calls may be arranged into call sequences including a synchronization call and at least one service call from a particular thread. Transmission characteristics of synchronization calls and service calls will be described with respect to further embodiments of further figures.

In an operation S257 the server call counter value included in the synchronization call of the call sequence and a client call counter value are compared, to determine an overtake condition, as outlined before.

The client call counter value indicates a number of service calls executed at the client unit, preferably prior to receiving the synchronization call, in order to correspond to the server call counter value upon detecting the thread change. Since the counting conditions for counting service calls at the client unit and the server unit preferably are the same, the client call counter value will indicate the number of service calls executed at the client unit corresponding to the number of service calls executed at the server unit before generating the synchronization message. Therefore, as long as call sequences did not overtake each other, the counter values will correspond, and no action is required as call execution is synchronized.

However, if the server call counter value and the client call counter value differ, an overtake condition is indicated, i.e., a call sequence overtook another call sequence. In particular, if the server call counter value of a current call sequence is larger than the client call counter value, at least one call sequence was overtaken by the considered call sequence.

In accordance with the above, in an operation S258 it is determined whether the server call counter value and the current client call counter value coincide and if the decision is "YES", in an operation S259 the service calls of the call sequence are executed and counted. Since the service calls are counted, the current counter value at the client unit will indicate the same number of executed service calls.

On the other hand, if in operation S258 the decision is "NO", indicating that the counter values differ, in an operation S260 the current call sequence is placed into a wait position, as an overtake condition is present.

After operations S259 and S260 the flow of operation returns to operation S256 and a subsequent call sequence can be considered. Call sequences may be processed as above in the order they were received at the client unit, however, as the synchronization calls allow to establish the correct sequence of execution at the client unit, i.e. the same sequence of execution as before at the server unit, the call sequences may be processed in an arbitrary order.

The correct sequence of service calls at the client unit is only maintained as long as the server call counter value of a synchronization call corresponds to a current client call counter value, a call sequence with a synchronization call which does not correspond to a current client call counter value, is placed into a wait position until the current client call counter value reaches the server call counter value of the synchronization call. During this period, call sequences with matching counter values will be processed and counted.

Accordingly, since call sequences are suitably placed into wait conditions if other call sequences were overtaken since only upon thread changes synchronization calls are transmitted between the server unit and the client unit, a communication overhead for maintaining a synchronization of service call execution at the client unit and at the server unit can be minimized.

Even though the operations of Fig. 2b are shown in a particular sequence, other embodiments may show other sequences of operations for maintaining a synchronization of service call execution at the client unit and server unit.

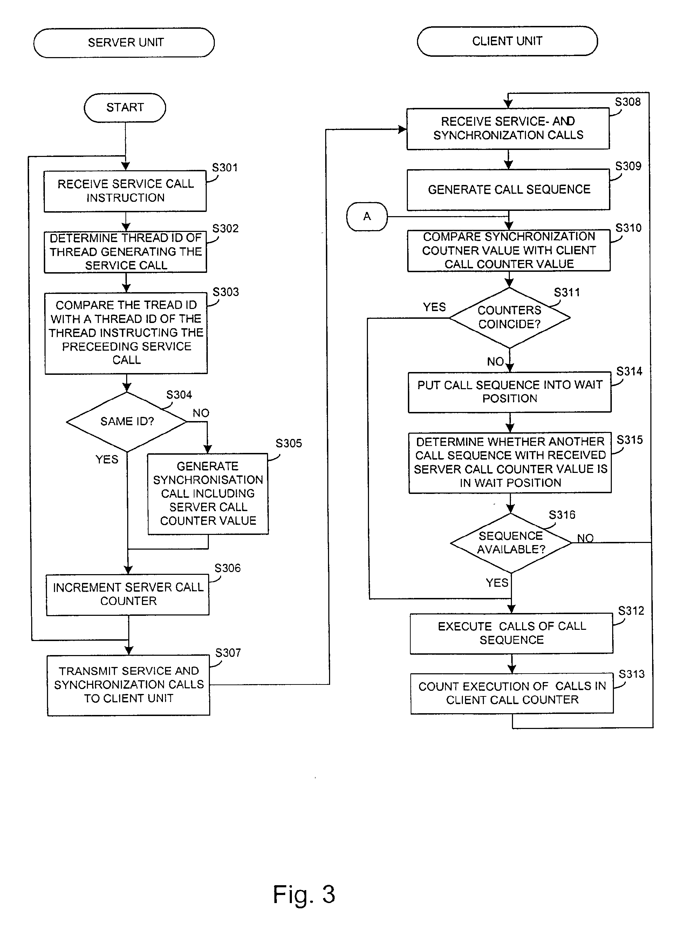

In the following a further embodiment of the invention will be described with respect to Fig. 3.

Fig. 3 shows operations at a server unit and a client unit for synchronizing calls according to another embodiment of the invention, particularly outlining further operations for determining an overtake condition at the server unit and with regard to the execution of call sequences at the client unit. The operations illustrated in Fig. 3 may be executed using the system of Fig. 1, however, Fig. 3 is not limited thereto.

On the left side of Fig. 3 operations at the server unit are illustrated, on the right side operations of the client unit are illustrated.

First, the operations at the server unit will be outlined in detail.

In an operation S301 a service call instruction is received at the server unit, for example as outlined with respect to operation S251 of Fig. 2b.

In an operations S302 a thread ID (identifier) of the thread generating the received service call is determined. The thread ID of a thread generating the current service call may be provided by a server call scheduler or by any other means keeping track of the execution of service calls from different threads.

In an operation S303 the thread ID of the thread generating the current service call is compared with a thread ID of a thread which has issued a preceding service call, in order to determine whether the service calls originate from different threads.

In an operation S304 it is determined whether the thread IDs are the same. If the decision is "NO", a synchronization call is generated, including the current server call counter value, e.g. indicating a number of service calls executed at the server unit prior to the thread change. The synchronization call may be generated as outlined with respect to previous embodiments.

If in operation S304 the decision is "YES", indicating that a thread change did not take place, in an operation S306 the server call counter is incremented in order to count the received service call instruction. Thereafter the flow returns to operation S301 and the next service call instruction is received.

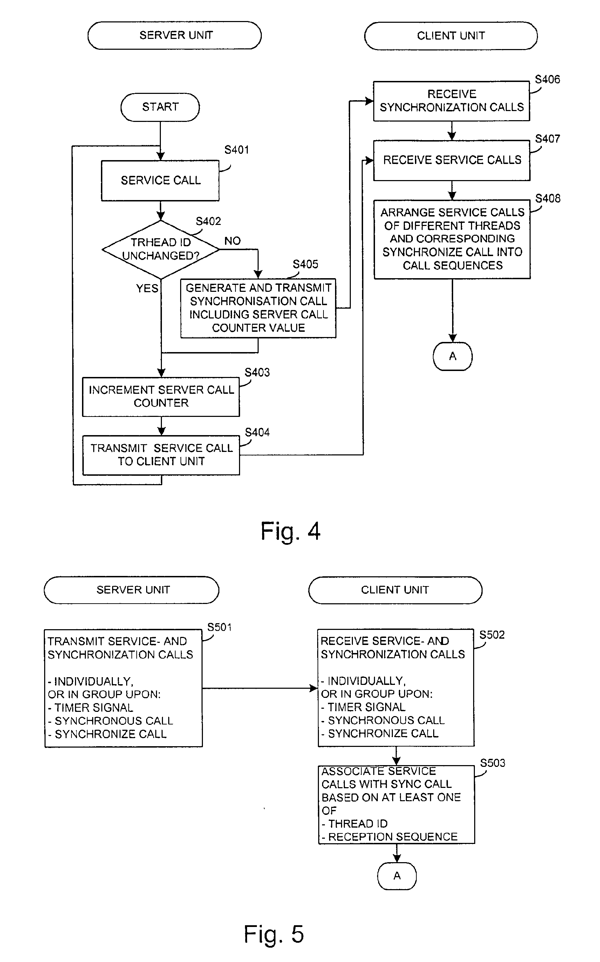

In an operation S307 following operation S306 the service calls and the synchronization calls are transmitted to the client unit, either sequentially upon a generation or from time to time in groups transmitted upon occurrence of a synchronization call, a synchronous call at the server unit or a timer signal, as it will be outlined with respect to the embodiments of Figs. 4 and 5.

In the following the operations at the client unit will be outlined in detail.

In an operation S308 the service calls and synchronization calls are received from the server unit via a communication link such as communication link 30 of Fig. 1. As outlined before the service calls may be received upon a timer signal, a synchronous call, a synchronization call or in an arbitrary order, as will be outlined with respect to Figs. 4 and 5.

If the service calls and synchronization call are not already arranged in call sequences, e.g. by the server unit, upon receiving the service calls and synchronization calls, the client unit generates in an operation S309 call sequences, each call sequence including a synchronization call and at least one service call from a particular thread. To facilitate generating call sequences, the synchronization call may include a thread ID of the thread which generated the associated service calls of the call sequence and the service calls may include a thread ID of the thread which generated the service call.

Each call sequence preferably includes a synchronization call and service calls which are to be executed at the client unit after the client counter value has reached the server call counter value included in the synchronization call.

In an operation S310 the synchronization counter value is compared with the current client call counter value in order to determine whether an overtake condition occurred. Operation S310 may correspond to operation S257 of Fig. 2b.

In operation S311 it is decided whether the counters coincide and if the decision is "YES", it is indicated that the correct sequence of service calls is presently scheduled for execution and thus in an operation S312 the calls of the call sequence are executed and in an operation S313 the calls are counted in the client call counter in order to maintain a correct counter value. After operation S313 the flow returns to operation S308.

If in operation S311 the decision is "NO", indicating that the call sequence overtook at least one other call sequence, in an operation S314 the call sequence is placed into a wait position. A wait condition may be achieved by halting the execution of a particular thread. Nevertheless, the service calls of the call sequence may be associated with the corresponding thread, but the thread will not be allowed to execute any service call as long as the halt condition continues. For example, the service calls of the call sequence may be placed into a call buffer and may be maintained in the call buffer as long as the call sequence and thus the thread is in the wait position.

In an operation S315 it is then determined whether another call sequence is available having a synchronization call with a server call counter value corresponding to the current client call counter value and being in a wait position. This may be achieved by interrogating the status of threads at the client unit in order to determine whether a particular thread and call sequence is in a wait position.

In an operation S316 it is determined whether such a call sequence is available. If in operation S316 the decision is "NO", the flow of operations returns to operation S318, i.e. the client unit waits to receive further service and synchronization calls. In this condition the client unit may be in a waiting condition waiting for another call sequence to be received from the server unit, wherein this call sequence includes a synchronization call including a server call counter value coinciding with the current client call counter value. Nevertheless, further operations or processes may be carried out at the client unit during this period.

If in operations S316 the decision is "YES", indicating that a call sequence with the correct server call counter value is available, the flow continues to operation S312 and the calls of the call sequence are executed and the execution of the calls is counted in the client call counter in operation S313. Thereafter the flow returns to operation S308, as outlined before.

The above outlined operations advantageously allow to place call sequences into wait positions until the current value of the client call counter coincides with the server call counter value included in the call sequence, in order to maintain a correct sequence of execution of call sequences.

Further, since only upon the occurrence of a thread change a synchronization call is generated and transmitted to the client unit, a reduced communication overhead may be achieved while maintaining a synchronization of service call execution between the client unit and the server unit.

Even though the operations of Fig. 3 are shown in a particular sequence, other embodiments may show other sequences of operations for maintaining a synchronization of service call execution at the client unit and server unit.

It is noted that in further embodiments synchronization calls may not only be generated at the server unit 10 upon the occurrence of a thread change at the server unit.

For example, synchronization calls could be generated from time to time upon a timer signal generated by a timer at the server unit. Further, a synchronization call could be generated after a predetermined number of service calls at the server unit or, a synchronization call could be further generated upon a synchronous call occurring at the server unit.

Transmitting further synchronization calls from the server unit to the client unit may allow to advantageously improve a robustness of the client and server system in achieving a synchronization of service call execution at the server unit and client unit.

In the following a further embodiment of the invention will be described with respect to Fig. 4.

Fig. 4 shows operations at a server unit and a client unit for synchronizing a service call execution at the server unit and client unit according to another embodiment of the invention. Fig. 4 particularly outlines a transmission scheme of synchronization calls and service calls at the server unit and a scheme for receiving and arranging the synchronization calls and service calls at the client unit. The operations shown in Fig. 4 may be carried out using the system shown in Fig. 1, however, Fig. 4 is not limited thereto.

First, the operations at the server unit will be outlined in detail.

In a first operation S401 a service call is received at the server unit, for example as outlined with respect to previous embodiments.

In an operation S402 it is determined whether a thread ID remained unchanged. If in operation S402 the decision is "YES", in an operation S403 a server call counter is incremented, for example as outlined with respect to previous embodiments.

In an operation S404 the service call is served including transmission to the client unit. The service call may be transmitted over a communication link such as communication link 30 shown in Fig. 1.

Thereafter the flow of operations returns to operation S401 and another service call is received.

If in operation S402 the decision is "NO", indicating that the thread ID changed, in an operation S405 a synchronization call is generated, at least including the server call counter value, e.g. the server call counter value prior to the thread change. Further, the synchronization call may include information on a thread responsible for the thread change and/or may include information on calls to be executed by the thread indicated in the synchronization call.

In the following the operations at the client unit will be outlined in detail.

In an operation S406 at the client unit synchronization calls are received from the server unit, for example as outlined with respect to previous embodiments. The received synchronization calls are preferably intermediately stored in a buffer.

In an operation S407 service calls are received from the server unit. The service calls may include information on a thread which generated the service call and may include further information allowing to synchronize an execution of service calls within a particular thread.

In an operation S408, since the synchronization calls and service calls are received in a sequence, the service calls of different threads and corresponding synchronization calls are partitioned into call sequences. A call sequence preferably includes a synchronization call, e.g. indicating a thread initiating the thread change and service calls relating to this particular thread until the next synchronization call indicating the next thread change is detected.

Thus, service calls are grouped in association with one synchronization call including a server call counter value allowing to execute the call sequences in a correct order at the client unit. After operation S408 the flow may continue at an entry point A shown in Fig. 3, i.e., the flow of operations may continue with operation S310 of Fig. 3.

The operations outlined above advantageously allow to arrange service calls in association with synchronization calls into call sequences for handling at the client unit.

Even though the operations of Fig. 4 are shown in a particular sequence, other embodiments may show other sequences of operations for maintaining a synchronization of service call execution at the client unit and server unit.

In the following a further embodiment of the invention will be described with respect to Fig. 5.

Fig. 5 shows operations for synchronizing a service call execution at a client unit and at a server unit, particularly outlining transmission characteristics of synchronization calls and service calls from the server unit to the client unit according to a further embodiment of the invention.

The operations of Fig. 5 may be carried out using the system of Fig. 1, however, Fig. 5 is not limited thereto.

Initially an operation S501 occurring at the server unit will be outlined in detail.

In operation S501 the service calls and synchronization calls are transmitted to the client unit. The service calls and synchronization calls may be transmitted individually, as it was for example outlined with respect to Fig. 4 or may be transmitted in groups. The groups may be included into packets of variable or fixed length for transmission through a communication link to the client unit.

A group of synchronization calls and/or synchronization calls may be generated at the server unit upon a timer signal, for example occurring every 10 ms or any other time period. Thus, the packet of calls may include only service calls if no thread change occurred or may include service calls and one or a plurality of synchronization calls, depending on the number of thread changes.

Further, a packet of service and/or synchronization calls may be transmitted to the client unit upon occurrence of a synchronous call at the server unit, i.e. a call which is executed in a synchronous mode at the server unit. Since synchronous calls may occur at arbitrary instances in time, a packet generated upon a synchronous call may have variable length and include only service calls or additionally synchronization calls.

Further, a packet of calls may be generated upon the occurrence of a synchronization call, i.e. a packet will include one synchronization call and one or a plurality of service calls of a particular thread, as outlined before.

In the following the operation at the client unit will be outlined in detail.

In an operation S502 the service- and synchronization calls are received at the client unit. The calls may be received individually, for example as it was outlined with respect to Fig. 4, or may be received in correspondence to the operation S501 upon the generation of a timer signal, a synchronous call or a synchronized call.

In case of a call packet upon a timer signal, and a synchronous call, the packet may include a plurality of service calls from different threads and a plurality of synchronization calls.

Therefore, in an operation S503 the service calls included in a packet or received individually need to be associated with a synchronization call. This may be achieved based on at least one of a thread identifier included in a service call and/or a synchronization call or may be determined upon a reception sequence or a order of service calls and call sequences within a particular packet.

Thereafter the flow may continue with entry point A of Fig. 3, i.e., the flow may continue with operation S310 of Fig. 3.

The operations outlined with respect to Fig. 5 allow further flexibility in transmitting service calls and synchronization calls from the server unit to the client unit, thus further reducing communication requirements.

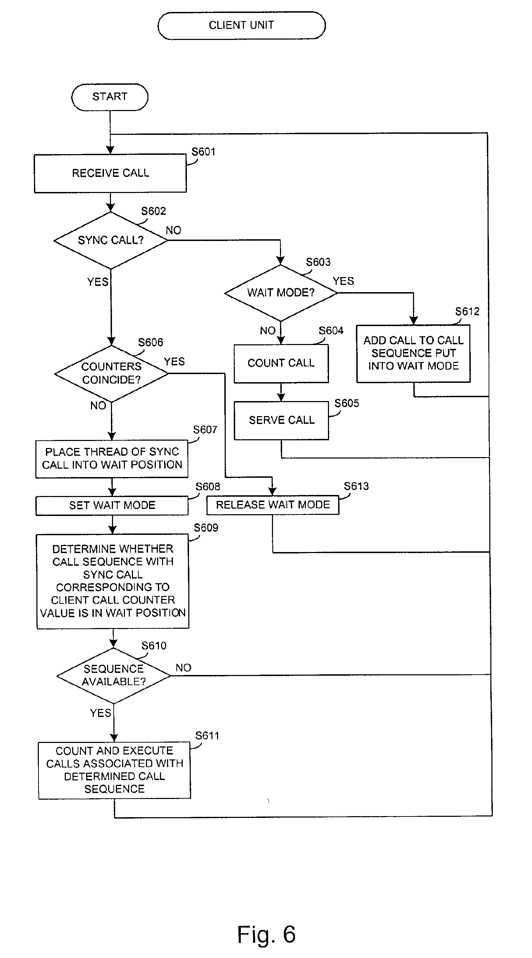

In the following a further embodiment of the invention will be described with respect to Fig. 6.

Fig. 6 shows operations for synchronizing call execution at a server unit and at a client unit, particularly outlining operations performed at a client unit. The operations of Fig. 6 may be carried out by the system shown in Fig. 1, however, Fig. 6 is not limited thereto.

In an operation S601 a call is received at the client unit. Receiving a call may include directly receiving a call from the server unit or may include handling a call of a number of calls, for example placed into a call sequence as outlined with respect to Figs. 4 and 5.

In an operation S602 it is determined whether the call is a synchronization call. If in operation S602 the decision is "NO", indicating that a regular service call is under consideration, it is determined in an operation S603 whether the system is in a wait mode (see operation S608, as outlined below).

If an operation S603 the decision is "NO", indicating that the system is not in a wait mode, the service call is counted in operation S604 and the service call is served in an operation S605, for example as outlined with respect to previous embodiments.

Serving the call may include displaying information, storing information, printing information or processing information.

After operation S605 the flow returns to operation S601 to continue with counting and processing service calls.

If in operation S602 the decision was "YES", indicating that a synchronization call is under consideration, in an operation S606 it is determined whether a server call counter value and a current client call counter value coincide. The server call counter value and the client call counter value are preferably determined as outlined with respect to previous embodiments.

If in operation S606 the decision is "NO", indicating that an overtake condition occurred, i.e. service calls from a first thread were passed by service calls from a second thread, in an operation S607 the thread associated with the synchronization call is placed into a wait position, for example as outlined with respect to previous embodiments.

Thereafter, in an operation S608 the system is placed into a wait mode, indicating that all calls received in a sequence of calls will not be executed directly but be placed into a wait position, for example buffered in a buffer in association with a corresponding thread.

Thereafter, in an operation S609 it is determined whether another call sequence with a synchronization call including a server call counter value corresponding to the current client call counter value is in a wait position, i.e. whether a corresponding thread was halted.

In an operation S610 it is determined whether such a call sequence is available, i.e. whether a corresponding thread in a halt position is available. If in operation S610 the decision is "NO", the flow returns to operation S601 and the next call is considered.

If in operation S610 the decision is "YES", indicating that a thread is in a wait position with a call sequence in a wait position having a synchronization call with a server call counter value corresponding to the current client call counter value, in an operation S611 the calls associated with the determined call sequence are executed within the thread at the client unit. Further, the calls are counted in order to maintain a correct client call counter value.

Thereafter the flow returns to operation S601 and a new call is considered.

If in operation S603 it was determined that the system is in the wait mode (see operation S608), i.e. the decision is "YES" in operation S603 the received call is added to the call sequence put into the wait mode, for example stored in a buffer in association with a corresponding thread. Thereafter the flow returns to operation S601 and the next call is received.

Further, if in operation S606 it is determined that the counters coincide, i.e. that an overtake condition did not occur, the wait mode is released in an operation S613 and the received call and further received calls can be executed and counted, since a correct synchronization between the client unit and the server unit is achieved. The operations outlined with respect to Fig. 6 allow to place threads and call sequences into wait positions and to resume execution of threads and call sequences to maintain a synchronization of a call execution at the client unit and the server unit.

Even though the operations of Fig. 6 are shown in a particular sequence, other embodiments may show other sequences of operations for maintaining a synchronization of service call execution at the client unit and server unit.

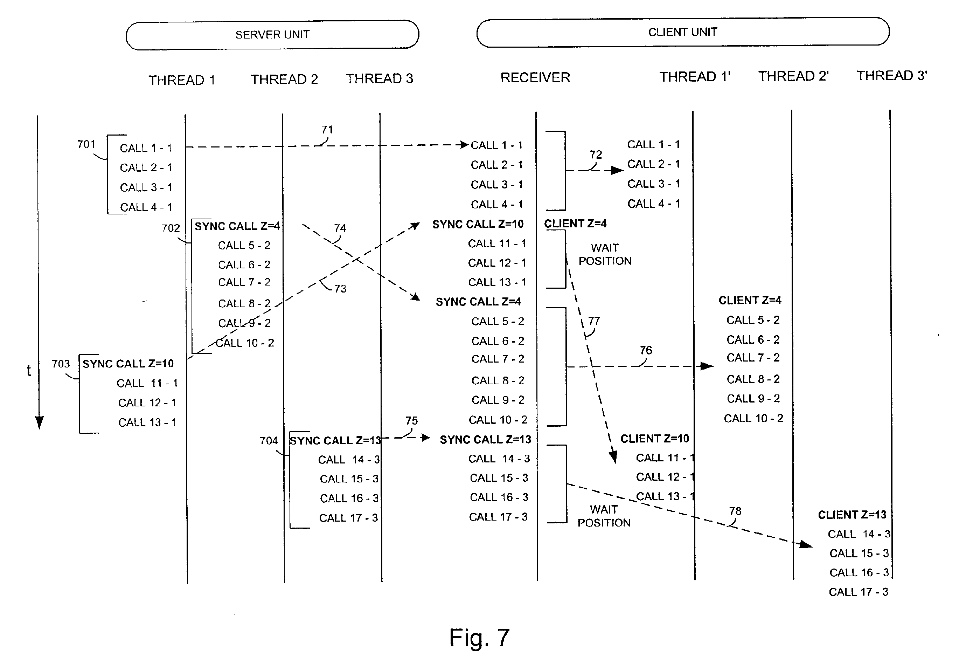

In the following a further embodiment of the invention will be described with respect to Fig. 7.

Fig. 7 shows an example of call sequences being executed at a server unit and at a client unit. The call sequence may be executed using the system of Fig. 1, however, Fig. 1 is not limited thereto.

On the left side of Fig. 7 a thread execution at the server unit is illustrated, including the execution of three threads, thread 1, thread 2 and thread 3. In vertical downward direction a time sequence of calls is outlined.

On the right side of Fig. 7 the execution of threads thread 1', thread 2', thread 3' is illustrated, being executed at the client unit, and further a receiver, for example a receiver buffer at the client unit is illustrated. Time evolves along downward vertical direction.

Initially at the server unit a thread 1 places a first call sequence 701, including a service call 1-1, a service call 2-1, a service call 3-1 and a service call 4-1.

After call 4-1 a thread change occurs and thread 2 places a second call sequence 702, including service calls 5-2, 6-2, 7-2, 8-2, 9-2 and 10-2.

Since prior to the call change from thread 1 to thread 2 four calls were executed, i.e. four calls of thread 1, a synchronization call with a service call counter value equal 4 will be generated.

After the second call sequence again a thread change occurs at the server unit leading to a synchronization call with a service call counter value equal 10 subsequent to which thread 1 places a third call sequence 703 including service calls 11-1, 12-1 and 13-1.

Thereafter another thread change occurs, a third thread, thread 3, places a fourth call sequence 704 including calls 14-3, 15-3, 16-3 and 17-3. Prior to these calls of the fourth call sequence a synchronization call with a service call counter value equal 13 will be generated.

In the following the exemplary sequence of reception of call sequences at the receiver buffer of the client unit is described.

In the present example of Fig. 7, the first call sequence 701 is received as a first call sequence, as indicated by an arrow 71. As indicated by an arrow 73 at the receiver buffer of the client unit the third call sequence 703 is received after the first call sequence 701 and prior to the second call sequence 702, indicated by an arrow 74. Thereafter the fourth call sequence 704 is received at the receiver buffer, as indicated by an arrow 75.

In accordance with this example of received call sequences at the receiver buffer the following operations will take place.

Since initially all counter values are zero, and a synchronization call did not occur, the service calls 1-1 to 4-1 of the first call sequence 701 may be directly executed in a first thread at the client unit, thread 1', corresponding to thread 1 at the server unit, as indicated by an arrow 72.

Thereafter, the client call counter has a value equal 4, which will be compared with the synchronization call of the third call sequence 703. Since the server call counter value of the synchronization call of the third call sequence 703 is equal 10, an overtake condition is detected and the third call sequence 703 is placed into a wait position, i.e. will not be directly executed.

Thereafter, since the current client call counter value is still equal 4, the second call sequence 702 will have a synchronization call with a service call counter value corresponding to the current client call counter value. Accordingly, as indicated by an arrow 76, the thread 2' will be instructed to execute the second call sequence 702.

After executing the second call sequence 702 the current client call counter value is equal 10, as ten service calls are executed so far, and it is determined that the server call counter value of the synchronization call of the third call sequence 703 corresponds to this client call counter value. Accordingly, subsequent to the second call sequence the third call sequence 703 is placed in a running mode as indicated by arrow 77 and the third call sequence is executed by the thread 1'.

After executing the third call sequence 703 the current client counter value is equal 13, as 13 service calls are executed so far.

When the fourth call sequence 704 was received at the receiver buffer, as indicated by the arrow 75, it was placed into a wait position, as the server call counter value of the synchronization call of the fourth call sequence 704, having a counter value of 13, did not correspond to the former current client counter value. However, now the server call counter value of 13 corresponds to the now reached current client call counter value after executing the third call sequence 703 and therefore, the fourth call sequence 704 will now be executed following to the third call sequence 703, as indicated by an arrow 78.

Thereafter further call sequences may be executed.

The above outlined call sequences show an example only, it is understood that any other call sequences involving an arbitrary number of threads at the server unit and an arbitrary number of threads at the client unit may be handled. The number of threads at the server unit and the number of threads at the client unit may further be different.

As shown with the example of Fig. 7, the four call sequences 701, 702, 703 and 704 are executed at the client unit in the correct sequence, i.e. in the same sequence as before at the server unit, by detecting overtake conditions and placing call sequences into wait positions, as necessary. As for maintaining a synchronization between the server unit and the client unit only the synchronization calls are needed, a communication overhead may be kept low.

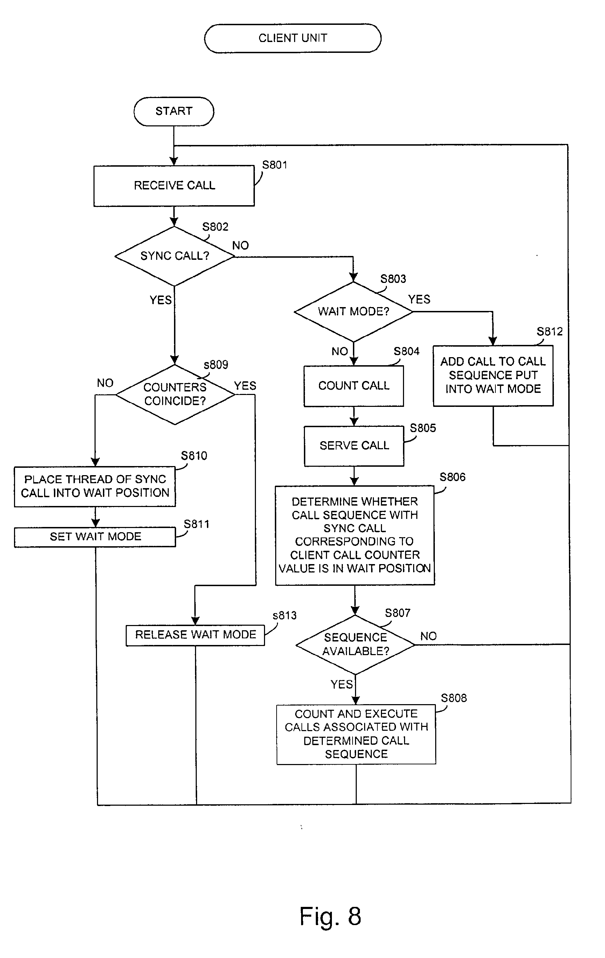

In the following a further embodiment of the invention will be described with respect to Fig. 8.

Fig. 8 shows operations of a method for synchronizing calls according to an embodiment of the invention, particularly outlining operations carried out at a client unit. The operations of Fig. 8 may be carried out by the system shown in Fig. 1, however, Fig. 8 is not limited thereto.

Fig. 8 is similar to Fig. 6, however, the respective embodiments differ in the way call sequences in a wait position are treated.

In a first operation S801 a call is received at the client unit, for example client unit 20 of Fig. 1.

In an operation S802 it is determined at the client unit whether the received call is a synchronization call, for example by analyzing the call and determining whether the call includes a server call counter value. If in operation S802 the decision is "NO", indicating that the received call is a service call, in an operation S803 it is determined whether the client unit is in a wait mode.

If in operation S803 the decision is "NO", in an operation S804 the received call is counted and in an operation S805 the received call is served, as for example outlined before.

It is noted that steps S801-S805 may correspond to steps S601-S605 of the embodiment described with respect to Fig. 6.

In an operation S806 it is determined at the client unit whether a call sequence having a synchronization call with a server call counter value corresponding to the current client call counter value is in a wait position. Thus, it is determined whether a previous call sequence, i.e. a call sequence which has overtaken other call sequences, is in a wait position and has a counter value indicating that this call sequence should now be served.

In an operation S807 it is determined whether such a call sequence is available. If in operation S807 the decision is "YES", in an operation S808 the calls associated with the determined call sequence are served and counted.

If in operation S807 the decision is "NO", indicating that a suitable call sequence in a wait position is not available, the flow returns to operation S801. It is noted that operations S806-S808 may correspond to the operations S609-S611 described with respect to the embodiment of Fig. 6.

If in operation S802 the decision is "YES", indicating that a synchronization call is under consideration, it is determined in an operation S809, whether the server call counter value included in the synchronization call coincides with the current client call counter value at the client unit. If in operation S809 the decision is "NO", indicating that the counters differ, the thread of the call sequence under consideration, e.g., as it may be indicated in the synchronization call, is placed into a wait position.

Thereafter, in an operation S811 the client unit is set into a wait mode and thereafter the flow returns to operation S801 for considering the next call.

It is noted that operations S809-S811 may correspond to operations S606-S608 of Fig. 6.

If in operation S803 the decision is "YES", indicating that the client unit is in the wait mode, in an operation S812 the call under consideration is added to the call sequence put into the wait mode, for example as outlined with respect to operation S612 described with regard to the embodiment of Fig. 6. After operation S812 the flow returns to operation S801 for considering the next received call.

Finally, if in operation S809 the decision is "YES", indicating that the server call counter value of the synchronization call and the current client call counter value coincide, in an operation S813 the wait mode is released, for example as outlined with respect to operation S613 described with respect to Fig. 6.

The operations outlined above allow to check the status of call sequences in a wait position after serving each call and thus, for example in a situation where the session between the client unit and a server unit, such as client unit 20 and server unit 10 of Fig. 1 is shut down, call sequences in a wait position may still be processed, even if no further synchronization call is received.

This allows a reliable closing down of a communication session between the client unit and the server unit.

It is noted that the above described processing operations of the above embodiments may be realized by dedicated hardware or may be realized as programs including code instructions executed on data processing units, e.g. the server unit 10 and the client unit 20. It is further possible that parts of the above sequences of operations are carried out in hardware, whereas others of the above processing operations are carried out using software.

It is further noted that a computer readable medium may be provided, having a program recorded thereon, where the program is to make a computer or system of data processing devices execute functions of the above described operations, particularly of the client unit and/or the server unit. A computer readable medium can be a magnetic or optical or other tangible medium on which a program is recorded, but can also be a signal, e.g., analog or digital, electromagnetic or optical, in which the program is embodied for transmission.

Further, a computer program product may be provided comprising the computer readable medium.

According to another embodiment a client unit may have the following elements.
1). Client unit in a server and client system for synchronizing calls, including
   - a code section containing instructions to receive service calls generated by a plurality of threads executed at a server unit and to receive a synchronization call from the server unit, the synchronization call indicating that a thread executed at the server unit has changed and indicating a number of service calls generated by threads at the server unit prior to the thread change; and
   - a code section containing instructions to place at least one service call associated with the synchronization call into a wait position, if the number indicated in the synchronization call and a number of service calls executed at the client unit prior to receiving the synchronization call differ.
2). Client unit of 1), including
   - a code section containing instructions to receive a first call sequence of a plurality call sequences from a server unit, the first call sequence including a first synchronization call and at least one service call from a first thread executed at the server unit, the first synchronization call including a first server call counter value indicating the number of service calls executed at the server unit prior to the first synchronization call;
   - a code section containing instructions to compare the first server call counter value and a client call counter value, the client call counter value indicating the number of service calls executed at the client unit prior to receiving the first synchronization call, and to execute the service calls of the first call sequence;
   - a code section containing instructions to count the executed service calls using the client call counter value, if the client call counter value and the first server call counter value coincide; and
   - a code section containing instructions to place the first call sequence into the wait position, if the client call counter value and the first server call counter value differ.
3). Client unit of 1), including
   - a code section containing instructions to determine whether a second call sequence in a wait position is available, the second call sequence including service calls from a second thread executed at the server unit and a second synchronization call including a second server call counter value indicating a number of service calls executed at the server unit prior to the second synchronization call, the second server call counter value coinciding with the client call counter value;
   - a code section containing instructions to execute the service calls of the second call sequence and to increment the client counter value for each executed service call, if the second call sequence is available.
4). Client unit of 1), including a code section containing instructions to set the client unit into a wait mode, to wait for a third call sequence to be received from the server unit, the third call sequence including a third synchronization call including a third server call counter value coinciding with the client call counter value.
5). Client unit of 1), wherein the call sequences are received from the server unit as packets upon one of the group consisting of:
   - a timer signal at the server unit;
   - a synchronous call at the server unit; and
   - a synchronization call at the server unit.
6). Client unit of 1), wherein
   a synchronization call includes a thread ID of the thread which generated the service calls of the call sequence;
   the service calls include the thread ID of the thread generating the service call; and
   including a code section containing instructions to receive the synchronization calls and the service calls in an arbitrary order.
7). Client unit of 1), including
   - a code section containing instructions to execute the service calls asynchronously; and
   - a code section containing instructions to execute the service calls from a plurality of different threads at the server unit in corresponding threads at the client unit.
8). Client unit of 1), including a code section containing instructions to store in a client call counter a client call counter value indicating a total number of service calls executed at the client unit involving communication with the server unit.
9). Client unit of 1), wherein each service call from the server unit includes at least one of:
   - drawing instructions to display information on a display of the client unit;
   - rendering instructions;
   - storing instructions to store information at the client unit; and
   - information on processing results from the server unit.

   According to another embodiment a server unit may have the following elements.
10). Server unit in a server and client system, including
   - a code section containing instructions to transmit service calls generated by a plurality of threads at the server unit to a client unit;
   - a code section containing instructions to generate a synchronization call, when a thread executed at the server unit changes, indicating a number of service calls generated by threads at the server unit prior to the thread change; and
   - a code section containing instructions to transmit the synchronization call to the client unit for allowing the client unit to synchronize a service call execution.

   For example, the client unit may be enabled to place at least one service call associated with the synchronization call into a wait position, if the number indicated in the synchronization call and a number of service calls executed at the client unit prior to receiving the synchronization call differ.
11). Server unit of 10), including
   - a code section containing instructions to receive a current service call from a first thread executed at the server unit (10) ;
   - a code section containing instructions to determine a first thread ID of the first thread and to compare the first thread ID with a second thread ID of a second thread which issued a service call preceding the current service call;
   - a code section containing instructions to generate a first synchronization call including a server call counter value indicating a number of service calls executed at the server unit prior to the current service call, if the first thread ID and the second thread ID differ;
   - a code section containing instructions to count the current service call using the server call counter value; and
   - a code section containing instructions to transmit the current service call and the first synchronization call to the client unit, for enabling the client unit to synchronize the execution of a plurality of calls from at least the first and second thread.
12). Server unit of 10), wherein
   a plurality of service calls from the first thread and the synchronization call constitute a call sequence; and
   including a code section containing instructions to transmit the call sequence to the client unit as a packet unit upon one of the group consisting of:
      - a timer signal; and
      - a synchronization call;
      - a synchronous call.
13). Server unit of 10), wherein
   the synchronization call includes a thread ID of the second thread;
   the service calls include the thread ID of the thread generating the service call; and
   including a code section containing instructions to transmit the synchronization calls and the service calls to the client unit in an arbitrary order.
14). Server unit of 10), including
   a code section containing instructions to execute the service calls asynchronously; and
   wherein the service calls from a plurality of different threads at the server unit are executed in corresponding threads at the client unit.
15). Server unit of 10), including a code section containing instructions to store in a server call counter a server call counter value indicating a total number of service calls at the server unit executed prior to the current service call and requiring communication with the client unit.
16). Server unit of 10), including a code section containing instructions to generate a synchronization call upon the occurrence one of the group consisting of:
   - a timer signal;
   - a predetermined number of service calls; and
   - a synchronous call.

Having described several embodiments of the invention in detail, various modifications and improvements will readily occur to those skilled in the art. Such modifications and improvements are intended to be within the spirit and scope of the invention. Accordingly, the foregoing description is by way of example only, and is not intended as limiting.

## Claims

1. Method for synchronizing calls at a client unit in a server and client system, including
receiving service calls generated by a plurality of threads executed at a server unit (10);
receiving a synchronization call from the server unit (10), the synchronization call indicating that a thread executed at the server unit has changed and indicating a number of service calls generated by threads at the server unit (10) prior to the thread change; and
placing at least one service call associated with the synchronization call into a wait position, if the number indicated in the synchronization call and a number of service calls executed at the client unit (20) prior to receiving the synchronization call differ.

2. Method for synchronizing calls at a client unit of claim 1, including
receiving a first call sequence of a plurality call sequences from the server unit (10), the first call sequence including a first synchronization call and at least one service call from a first thread, the first synchronization call including a first server call counter value indicating the number of service calls executed at the server unit (10) prior to the first synchronization call;
comparing the first server call counter value and a client call counter value, the client call counter value indicating the number of service calls executed at the client unit (20) prior to receiving the first synchronization call;
executing the service calls of the first call sequence and counting the executed service calls using the client call counter value, if the client call counter value and the first server call counter value coincide; and
placing the first call sequence into a wait position, if the client call counter value and the first server current call counter value differ.

3. Method for synchronizing calls at a client unit of one of the preceding claims, including
determining whether a second call sequence in a wait position is available, the second call sequence including service calls from a second thread executed at the server unit (10) and a second synchronization call including a second server call counter value indicating a number of service calls executed at the server unit (10) prior to the second synchronization call, the second server call counter value coinciding with the client call counter value; and
executing the service calls of the second call sequence and incrementing the client counter value for each executed service call, if the second call sequence is available.

4. Method for synchronizing calls at a client unit of one of the preceding claims, including waiting for a third call sequence to be received from the server unit (10), the third call sequence including a third synchronization call including a third server call counter value coinciding with the client call counter value.

5. Method for synchronizing calls at a client unit of one of the preceding claims, wherein the call sequences are received from the server unit (10) as packets upon one of the group consisting of:
- a timer signal at the server unit (10);
- a synchronous call at the server unit (10); and
- a synchronization call at the server unit (10).

6. Method for synchronizing calls at a client unit of one of the claims 1 - 3, wherein
a synchronization call includes a thread ID of the thread which generated the service calls of the call sequence;
the service calls include the thread ID of the thread generating the service call; and
wherein the synchronization calls and the service calls are received in an arbitrary order.

7. Method for synchronizing calls at a client unit of one of the preceding claims, wherein
the service calls at the client unit (20) are executed asynchronously; and
the service calls from a plurality of different threads at the server unit (10) are executed in corresponding threads at the client unit (20).

8. Method for synchronizing calls at a client unit of one of the preceding claims, wherein
the server call counter value indicates a total number of service calls at the server unit (10) executed prior to the current service call and requiring communication with the client unit (20); and
the client call counter value indicates a total number of service calls executed at the client unit (20) involving communication with the server unit (10).

9. Method for synchronizing calls at a client unit of one of the preceding claims, wherein each service call from the server unit (10) includes at least one of:
- drawing instructions to display information on a display of the client unit (20);
- rendering instructions;
- storing instructions to store information at the client unit (20); and
- information on processing results from the server unit (10).

10. Method for synchronizing calls at a server unit in a server and client system, including
transmitting service calls generated by a plurality of threads at the server unit (10) to a client unit;
generating a synchronization call when a thread executed at the server unit changes, the synchronization call indicating a number of service calls generated by threads at the server unit (10) prior to the thread change; and
transmitting the synchronization call to the client unit (20) for allowing the client unit to synchronize a service call execution.

11. Method for synchronizing calls at a server unit of claim 10, including
generating a current service call by a first thread executed at the server unit (10);
determining a first thread ID of the first thread and comparing the first thread ID with a second thread ID of a second thread which issued a service call preceding the current service call;
in case the first thread ID and the second thread ID differ, generating a first synchronization call including a server call counter value indicating the number of service calls executed at the server unit (10) prior to the current service call and transmitting the first synchronization call to the client unit (20), for enabling the client unit (20) to synchronize the execution of a plurality of calls from at least the first and second thread;
counting the current service call using the server call counter value; and
transmitting the current service call to the client unit (20).

12. Method for synchronizing calls at a server unit of one of the claims 10 or 11, wherein
a plurality of service calls from the first thread and the synchronization call constitute a call sequence; and the call sequence is transmitted to the client unit (20) as a packet unit upon one of the group consisting of:
- a timer signal; and
- a synchronization call;
- a synchronous call.

13. Method for synchronizing calls at a server unit of one of the claims 10 -12, wherein
the synchronization call includes a thread ID of the second thread;
the service calls include the thread ID of the thread generating the service call; and
wherein the synchronization calls and the service calls are transmitted to the client unit (20) in an arbitrary order.

14. Method for synchronizing calls at a server unit of one of the claims 10 -13, wherein the service calls at the server unit (10) are executed asynchronously; and
the service calls from a plurality of different threads at the server unit (10) are executed in corresponding threads at the client unit (20).

15. Method for synchronizing calls at a server unit of one of the claims 10 -14, wherein the server call counter value indicates a total number of service calls requiring communication with the client unit (20) executed at the server unit (10) prior to the current service call.

16. Method for synchronizing calls at a server unit of one of the claims 10 -15, wherein each service call from the server unit (10) includes at least one of:
- drawing instructions to display information on a display of the client unit (20);
- rendering instructions;
- storing instructions to store information at the client unit (20); and
- information on processing results from the server unit (10).

17. Method for synchronizing calls at a server unit of one of the claims 10 -16, wherein a synchronization call is further generated upon the occurrence one of the group consisting of:
- a timer signal;
- a predetermined number of service calls; and
- a synchronous call.

18. A program having instructions adapted to carry out the method of one of the preceding claims.

19. A computer readable medium, having a program recorded thereon, where the program is to make the computer execute the method of one of the claims 1 - 17.

20. A computer program product comprising the computer readable medium according to claim 19.

21. Client unit in a server and client system for synchronizing calls, including
a client communication unit (24) to receive service calls generated by a plurality of threads executed at a server unit (10) and to receive a synchronization call from the server unit (10), the synchronization call indicating that a thread executed at the server unit has changed and indicating a number of service calls generated by threads at the server unit (10) prior to the thread change; and
a call handler (23) to place at least one service call associated with the synchronization call into a wait position, if the number indicated in the synchronization call and a number of service calls executed at the client unit (20) prior to receiving the synchronization call differ.

22. Client unit of claim 21, wherein
the client communication unit (24) is adapted to receive a first call sequence of a plurality call sequences from a server unit (10), the first call sequence including a first synchronization call and at least one service call from a first thread executed at the server unit (10), the first synchronization call including a first server call counter value indicating the number of service calls executed at the server unit (10) prior to the first synchronization call;
a client data processing unit (21) is provided, adapted to compare the first server call counter value and a client call counter value, the client call counter value indicating the number of service calls executed at the client unit (20) prior to receiving the first
synchronization call, and to execute the service calls of the first call sequence;
a client call counter (22) is provided, adapted to count the executed service calls using the client call counter value, if the client call counter value and the first server call counter value coincide; and
the call handler (23) is adapted to place the first call sequence into the wait position, if the client call counter value and the first server call counter value differ.

23. Client unit of one of the claims 21 or 22, wherein the client data processing unit (21) is adapted
to determine whether a second call sequence in a wait position is available, the second call sequence including service calls from a second thread executed at the server unit (10) and a second synchronization call including a second server call counter value indicating a number of service calls executed at the server unit (10) prior to the second synchronization call, the second server call counter value coinciding with the client call counter value; and
to execute the service calls of the second call sequence and to increment the client counter value for each executed service call, if the second call sequence is available.

24. Client unit of one of the claims 21 - 23, wherein the client data processing unit (21) is adapted to wait for a third call sequence to be received from the server unit (10), the third call sequence including a third synchronization call including a third server call counter value coinciding with the client call counter value.

25. Client unit of one of the claims 21 - 24, wherein the call sequences are received from the server unit (10) as packets upon one of the group consisting of:
- a timer signal at the server unit (10);
- a synchronous call at the server unit (10); and
- a synchronization call at the server unit (10).

26. Client unit of one of the claims 21 - 25, wherein
a synchronization call includes a thread ID of the thread which generated the service calls of the call sequence;
the service calls include the thread ID of the thread generating the service call; and
wherein communication means is adapted to receive the synchronization calls and the service calls in an arbitrary order.

27. Client unit of one of the claims 21 - 26, wherein
the client data processing unit (21) is adapted to execute the service calls asynchronously; and
to execute the service calls from a plurality of different threads at the server unit (10) in corresponding threads at the client unit (20).

28. Client unit of one of the claims 21 - 27, wherein
a server call counter (12) stores a server call counter value indicating a total number of service calls at the server unit executed prior to the current service call and requiring communication with the client unit (20); and
the client call counter (22) stores a client call counter value indicating a total number of service calls executed at the client unit (20) involving communication with the server unit (10).

29. Client unit of one of the claims 21 - 28, wherein each service call from the server unit (10) includes at least one of:
- drawing instructions to display information on a display of the client unit (20);
- rendering instructions;
- storing instructions to store information at the client unit (20); and
- information on processing results from the server unit (10).

30. Server unit in a server and client system, including
a server communication unit (13) adapted to transmit service calls generated by a plurality of threads at the server unit (10) to a client unit (20);
a server data processing unit (11) adapted to generate a synchronization call, when a thread executed at the server unit changes, indicating a number of service calls generated by threads at the server unit prior to the thread change; and
wherein the server communication unit (13) is adapted to transmit the synchronization call to the client unit (20) for allowing the client unit to synchronize a service call execution.

31. Server unit of claim 30, wherein
the client data processing unit (11) is adapted
- to receive a current service call from a first thread executed at the server unit (10);
- to determine a first thread ID of the first thread and to compare the first thread ID with a second thread ID of a second thread which issued a service call preceding the current service call;
- in case the first thread ID and the second thread ID differ, to generate a first synchronization call including a server call counter value indicating a number of service calls executed at the server unit (10) prior to the current service call;
- to count the current service call using the server call counter value; and
the server communication unit (13) is adapted to transmit the current service call and the first synchronization call to the client unit (20), for enabling the client unit to synchronize the execution of a plurality of calls from at least the first and second thread.

32. Server unit of one of the claims 30 or 31, wherein
a plurality of service calls from the first thread and the synchronization call constitute a call sequence; and
the server communication unit (13) is adapted to transmit the call sequence to the client unit (20) as a packet unit upon one of the group consisting of:
- a timer signal;
- a synchronization call; and
- a synchronous call.

33. Server unit of one of the claims 30 - 32, wherein
the synchronization call includes a thread ID of the second thread;
the service calls include the thread ID of the thread generating the service call; and
wherein the server communication unit (13) is adapted to transmit the synchronization calls and the service calls to the client unit (20) in an arbitrary order.

34. Server unit of one of the claims 30 - 33, wherein
the client data processing unit (11) is adapted to execute the service calls asynchronously; and
wherein the service calls from a plurality of different threads at the server unit (10) are executed in corresponding threads at the client unit (20).

35. Server unit of one of the claims 30 - 34, wherein the server call counter (12) stores the server call counter value indicating a total number of service calls requiring communication with the client unit (20) executed at the server unit (10) prior to the current service call.

36. Server unit of one of the claims 30 - 35, wherein each service call from the server unit (10) includes at least one of:
- drawing instructions to display information on a display of the client unit (20);
- rendering instructions;
- storing instructions to store information at the client unit (20); and
- information on processing results from the server unit (10).

37. Server unit of one of the claims 30 - 36, wherein a synchronization call is further generated upon the occurrence one of the group consisting of:
- a timer signal;
- a predetermined number of service calls; and
- a synchronous call.
